Europäisches Patentamt

European Patent Office

Office européen des brevets

(11) Publication number: **0 277 804 B1**

# EUROPEAN PATENT SPECIFICATION

(45) Date of publication of patent specification: **29.09.93**  (51) Int. Cl.5: **G02B 5/30**

(21) Application number: **88300862.5**

(22) Date of filing: **02.02.88**

(54) Polycarbonate films effective as optical phase retarders.

(30) Priority: **02.02.87 JP 22985/87**
**20.04.87 JP 97014/87**

(43) Date of publication of application:
**10.08.88 Bulletin  88/32**

(45) Publication of the grant of the patent:
**29.09.93 Bulletin  93/39**

(84) Designated Contracting States:
**CH DE FR GB IT LI NL**

(56) References cited:
**DD-A- 146 859**

**PATENT ABSTRACTS OF JAPAN, vol. 6, no. 5
(P-97)[883], 13th January 1982; & JP - A - 56
130 703**

**PATENT ABSTRACTS OF JAPAN, vol. 5, no.
202 (P-95)[874], 22nd December 1981, & JP -
A - 56 125 703**

**PATENT ABSTRACTS OF JAPAN, vol. 6, no. 5
(P-97)[883], 13th January 1982; & JP - A - 56
130 701**

**"Handbook of Optics", W.G. Driscoll and W.
Vaughan Eds., Optical Society of America,**

**McGraw-Hill Inc. 1978, pp. 9-29, 9-30.**

(73) Proprietor: **SUMITOMO CHEMICAL COMPANY,
LIMITED
Kitahama 4-chome 5-33
Chuo-ku Osaka 541(JP)**

(72) Inventor: **Kitamura, Shuji
2-15-3, Kayougaoka
Nagaokakyo-shi Kyoto(JP)**
Inventor: **Nakamura, Kimishige
3-13-801, Mizuo
Ibaraki-shi Osaka(JP)**
Inventor: **Okada, Toyokazu
45-B-106, Yamadaminami
Suita-shi Osaka(JP)**
Inventor: **Sakakura, Kazuaki
2-20, Takase.-cho
Moriguchi-shi Osaka(JP)**
Inventor: **Kikui, Hitoshi
2-1, Kuwata-cho
Ibaraki-shi Osaka(JP)**

(74) Representative: **Diamond, Bryan Clive et al
Gee & Co., Chancery House, Chancery Lane
London WC2A 1OU (GB)**

## Description

This invention relates to a polymeric film useful as an optical phase retarder.

A phase retarder is a film or sheet showing birefringence to light. Since a phase retarder has different refractive indices in two perpendicular directions, light transmitted through the phase retarder generates light rays whose planes of polarization have a phase difference.

Phase retarders which are currently commercially available and have been in practical use include a so-called $\frac{1}{4}$ retarder having a function of causing incident light having a wavelength of $\lambda$ to have a phase difference of $\frac{1}{4} \lambda$. The $\frac{1}{4}$ retarder is prepared by uniaxially stretching a cellulose acetate-based film. A $\frac{1}{4}$ retarder is useful as a circular polarizer which is combined with a linear polarizer at an inclination of 45° with respect to the main optic axis of the linear polarizer. It is also utilized for anti-glare materials, for example, as a VDT filter making use of its function to suppress reflected light.

In addition to the above-described cellulosic polymer, high polymeric materials which have been proposed to constitute a $\frac{1}{4}$ retarder include polyvinyl chloride resins as disclosed in Japanese Patent Publication No. 34477/70 and Japanese Patent Application (OPI) No. 125702/81 (the term "OPI" as used herein means an unexamined published Japanese patent application); polycarbonate resins are disclosed in Japanese Patent Publication No. 12190/66 (stretching in warm water under constant load) and Japanese Patent Application (OPI) No. 130703/81; polyacrylonitrile resins as disclosed in Japanese Patent Application (OPI) No. 130702/81; polystyrene resins as disclosed in Japanese Patent Application (OPI) No. 125703/81 and polyolefin resins as disclosed in Japanese Patent Application (OPI) No. 24502/85. However, all the conventional phase retarders made of these materials are $\frac{1}{4}$ retarders whose retardation value (hereinafter referred to as R value) is in the vicinity of 135 nm. None of the above-cited publications refers to a process for producing a $\frac{1}{2}$ retarder or a full retarder. The terminology "R value" as used herein means the product of the thickness (t) of the film or sheet and the birefringence ($\Delta$n) of the film or sheet and can be represented by the equation:

$$R = \Delta n \times t$$

Recent studies have been directed to application of a $\frac{1}{2}$ retarder or a full retarder which causes a phase difference of $\frac{1}{2} \lambda$ or $\lambda$, respectively. However, there has not been proposed any phase retarder having satisfactory quality, that is, having an R value between 200 and 625 nm, preferably between 200 and 350 nm (1/2 retarder) or between 475 and 625 nm (full retarder) and being free from optical color unevenness.

DD-A-146859 describes a film of a polycarbonate ester stretched e.g. by a factor of 1.34 and useful as an optical retarder and it has a retardation value of 122 to 157 in the examples, is achromatic and has high homogeneity.

According to the present invention we provide a stretched film useful as an optical phase retarder obtained by uniaxially stretching a polycarbonate film characterised in that:

said polycarbonate film is a film of polycarbonate homopolymer or copolymer,

said stretched film is obtained by transverse uniaxial stretching, compression stretching or longitudinal uniaxial stretching said polymeric film while the neck-in ratio is controlled to not exceed 10%, and to an extent such that the retardation value of said stretched film measured with a polarizing microscope is from 200 nm to 625 nm, and

the optical color unevenness of said stretched film is low, this feature being determined by the fact that the color difference $\Delta E_{CR}$, given in terms of the Cube-Root formula and measured in accordance with the color specification given in JIS-Z-8729, of said stretched film is such that the highest measured value thereof is not more than 20 as measured with a spectrophotometer under two crossed Nicol prisms with the stretched film being set in such a manner that its main optic axis makes an angle of 45 degrees with the crossed Nicols, in accordance with JIS-Z-8120.

The polycarbonate polymer which can be used in the present invention includes straight chain polycarbonates or polycarbonate copolymers having a bisphenol group. The polycarbonate polymers are prepared from 4,4'-dihydroxydiarylalkanes or their halogen substitutes by using the phosgene or ester interchange method and should have a high grade of transparency. As the 4,4$'$-dihydroxydiarylalkanes and their halogen substitutes for use in making the polymer there are given, for example, 4,4$'$-dihydroxydiphenylmethane, 4,4$'$-dihydroxydiphenylethane, 4,4$'$-dihydroxydiphenylbutane, 4,4$'$-dihydroxydiphenyl-2,2-propane, 3,3$'$-dibromo-4,4$'$-dihydroxydiphenyl-2,2-propane, 3,3$'$-dichloro-4,4$'$-dihydroxydiphenyl-2,2-propane, and 3,3$'$,5,5$'$-tetrabromo-4,4$'$-dihydroxydiphenyl-2,2-propane.

Besides the above-mentioned polycarbonates or polycarbonate copolymers, blends of these polymers with up to about 50 wt% of polystyrene resins are usable in the present invention.

The phase retarder according to the present invention can be obtained by molding the above-described polycarbonate polymer into a film or sheet by known techniques, such as solvent casting, calendering or extrusion, and uniaxially stretching the film or sheet to an appropriate degree. The uniaxial stretching can be carried out by conventional methods, such as transverse uniaxial stretching by tentering, compression stretching between rolls, and longitudinal uniaxial stretching by means of rolls having different peripheral speeds.

Among them, the most effective stretching method for securing freedom from optical color unevenenss is the transverse uniaxial stretching method by tentering that does not cause neck-in substantially. The compression stretching method or the longitudinal uniaxial stretching method utilizing rolls may also be effective as long as the neck-in ratio, 100 × (A - B)/A, wherein A is the film width before stretching and B is the film width after stretching, is controlled not to exceed 10% and preferably not to exceed 5%.

The terminology "optical color unevenness" used herein can be expressed quantitatively by $\Delta E$ as hereinafter defined. With the phase retarder being set under crossed Nicol prisms (cut and cemented calcite crystals) so that its main optic axis makes an angle of 45° with the crossed Nicols, $L^*$, $a^*$, and $b^*$ of the phase retarder are determined by means of a spectrophotometer or spectrometer in accordance with JIS -Z - 8729 (color specification according to an $L^*$ $a^*$ $b^*$ colorimetric system or an $L^*$ $u^*$ $v^*$ colorimetric system). The determination is made on $\underline{n}$ samples from different locations, and $(\Delta E_{CR})i,j$ is calculated from the measured values, $L^*$, $a^*$, and $b^*$ according to the cube-Root formula (defined in HANDBOOK OF OPTICS, W.G. Driscoll and W. Vaughan Eds., Optical Society of America; McGraw-Hill, Inc. 1978; pages 9-29 and 9-30):-

$$(\Delta E_{CR})i,j = [((\Delta L^*)i,j)^2 + ((\Delta a^*)i,j)^2 + ((\Delta b^*)i,j)^2]^{1/2}$$

wherein

$(\Delta L^*)i,j$ = $(L^*)i - (L^*)j$;
$(\Delta a^*)i,j$ = $(a^*)i - (a^*)j$;
$(\Delta b^*)i,j$ = $(b^*)i - (b^*)j$;
i = l to n;
j = l to n;

and

i ≠ j.

The highest of the measured $(\Delta E_{CR})i,j$ values is taken as $\Delta E_{CR}$. The more the number of determinations (n), the higher the precision of the result. Usually, colorimetric determination is carried out on ten random locations of a sheet or film (30 cm length × 30 cm width) to determine $\Delta E_{CR}$. If a phase retarder has $\Delta E_{CR}$ exceeding 20, color unevenness and a rainbow pattern would be visually observed under crossed Nicols. Such a film can never be used as a phase retarder in the present invention.

The 1/2 retarder according to the present invention has its function controlled to cause a retardation of 1/2 of an average wavelength of natural light ($\lambda = 550$ nm) and has its retardation controlled so as to fall within a range of from about 200 to about 350 nm and preferably from about 250 to about 300 nm. On the other hand, the full retarder according to the present invention has its function controlled to cause a retardation of an average wavelength of natural light ($\lambda = 550$ nm) and has its retardation controlled so as to fall within a range of from about 475 to about 625 nm and preferably from about 525 to about 575 nm.

Thus, the phase retarder of the present invention causes retardation of $1/2 \lambda$ or $\lambda$, differing from the conventionally available 1/4 retarder that causes retardation of $\frac{1}{4}$, and can be utilized in a new application, such as various optics typically including optical filters, and liquid crystal displays. ¾ retarders having a value of 350-475 are also useful, e.g. for STN type liquid phase retarders.

The present invention is now illustrated in greater detail with reference to the following non-limiting Examples and to Comparative Examples. In these examples, R values were determined as described above by using a polarizing microscope equipped with a Senarmont compensator and a halogen lamp as a light source. $\Delta E_{CR}$ values were determined by the use of a spectrophotometer and calculated according to the above-described equation.

EXAMPLE 1

A transparent polycarbonate extruded film (average molecular weight: 28,000) of 100 $\mu$m thick and 200 mm wide was preheated at 180°C and then subjected to transverse uniaxial stretching by tentering at 170°C to obtain a stretched film having a thickness of about 58 $\mu$m and a width of 340 mm. The resulting stretched film was found to have an R value of about 275 nm and a $\Delta E_{CR}$ of 6.8 with uniform quality, proving usable as a 1/2 retarder.

EXAMPLE 2

In the same manner as described in Example 1, a stretched film having a thickness of about 50 $\mu$m and a width of 400 mm was prepared. This stretched film was found to have an R value of about 290 nm and a $\Delta E_{CR}$ of 5.3 with uniform quality, proving usable as a 1/2 retarder.

EXAMPLE 3

A transparent polycarbonate extruded film (average molecular weight: 28,000) of 100 $\mu$m thick and 500 mm wide was longitudinally stretched by compression through a pair of rolls (pressure: 500 kg/cm) heated at 170°C to obtain a stretched film having a thickness of about 60 $\mu$m and a width of 480 mm (neck-in ratio: 4%). The resulting film was found to have an R value of about 265 nm and a $\Delta E_{CR}$ of 10.0 with uniform quality, proving employable as a 1/2 retarder.

## EXAMPLE 4

A transparent polycarbonate extruded film (average molecular weight: 28,000) of 100 $\mu$m thick and 500 mm wide was preheated at 170°C and then longitudinally stretched by passing between rolls having different peripheral speeds to obtain a stretched film having a thickness of about 60 $\mu$m and a width of 465 mm (neck-in ratio: 7%). The resulting film was found to have an R value of about 255 nm and a $\Delta E_{CR}$ of 14.8 with uniform quality, proving usable as a 1/2 retarder.

## COMPARATIVE EXAMPLE 1

The same procedure of Example 4 was repeated, except that the distance between rolls was extended, to obtain a stretched film having a thickness of about 60 $\mu$m and a width of 400 mm (neck-in ratio: 20%). The film was found to have an R value of about 230 nm and a $\Delta E_{CR}$ of 27 and observed to have color unevenness and a rainbow pattern under crossed nicols, proving unemployable as a 1/2 retarder.

## COMPARATIVE EXAMPLE 2

The same procedure of Example 4 was repeated, except changing the preheating temperature to 180°C to obtain a stretched film having a thickness of about 50 $\mu$m and a width of 300 mm (neck-in ratio: 40%). The resulting film had an R value of about 80 nm and a $\Delta E_{CR}$ of 70 and was found to have color unevenness and a rainbow pattern under crossed nicols, proving unusable as a 1/2 retarder.

## EXAMPLE 5

A transparent polycarbonate extruded film (average molecular weight: 26,000) of 100 $\mu$m thick and 200 mm wide was preheated at 170°C and subjected to transverse uniaxial stretching by tentering at 160°C to obtain a stretched film having a thickness of about 50 $\mu$m and a width of 400 mm. The resulting stretched film was found to have an R value of about 565 nm and a $\Delta E_{CR}$ of 8.3 with uniform quality, proving usable as a full retarder.

## EXAMPLE 6

In the same manner as described in Example 5, a stretched film having a thickness of about 30 $\mu$m and a width of 600 mm was obtained. The stretched film was found to have an R value of about 590 nm and a $\Delta E_{CR}$ of 5.0 with uniform quality, proving usable as a full retarder.

## EXAMPLE 7

A transparent polycarbonate extruded film (average molecular weight: 26,000) of 100 $\mu$m thick and 500 mm wide was longitudinally stretched by compressing through a pair of rolls (pressure: 600 kg/cm) heated at 150°C to obtain a stretched film having a thickness of about 55 $\mu$m and a width of 480 mm (neck-in ratio: 4%). The resulting film was found to have an R value of about 540 nm and a $\Delta E_{CR}$ of 12.7 with uniform quality, proving employable as a full retarder.

## EXAMPLE 8

A transparent polycarbonate extruded film (average molecular weight: 26,000) of 100 $\mu$m thick and 500 mm wide was preheated at 160°C and then longitudinally stretched by passing between rolls having different peripheral speeds to obtain a stretched film having a thickness of about 60 $\mu$m and a width of 465 mm (neck-in ratio: 7%). The film was found to have an R value of about 500 nm and a $\Delta E_{CR}$ of 15.1 with uniform quality, proving usable as a full retarder.

## COMPARATIVE EXAMPLE 3

The same procedure of Example 8 was repeated, except extending the distance between rolls for longitudinal stretching to obtain a stretched film having a thickness of about 60 $\mu$m and a width of 400 mm (neck-in ratio: 20%). The resulting film was found to have an R value of about 500 nm and a $\Delta E_{CR}$ of 30 and observed to have color unevenness and a rainbow pattern under crossed nicols, proving unusable as a full retarder.

## COMPARATIVE EXAMPLE 4

The same procedure of Example 8 was repeated, except preheating the film at 180°C to obtain a stretched film having a thickness of about 50 $\mu$m and a width of 300 mm (neck-in ratio: 40%). The resulting film was found to have an R value of about 80 nm and a $\Delta E_{CR}$ of 70 and observed to suffer color unevenness and a rainbow pattern, proving unemployable as a full retarder

## Claims

1. A stretched film useful as an optical phase retarder obtained by uniaxially stretching a polycarbonate film characterized in that:

   said polycarbonate film is a film of polycarbonate homopolymer or copolymer,

   said stretched film is obtained by transverse uniaxial stretching, compression stretching or longitudinal uniaxial stretching said polymeric film while the neck-in ratio is controlled to not exceed 10%, and to an extent such that the retardation value of said stretched film measured with a polarizing microscope is from 200 nm to 625 nm, and

   the optical color unevenness of said stretched film is low, this feature being determined by the fact that the color difference $\Delta E_{CR}$, given in terms of the Cube-Root formula and measured in accordance with the color specification given in JIS-Z-8729, of said stretched film is such that the highest measured value thereof is not more than 20 as measured with a spectrophotometer under two crossed Nicol prisms with the stretched film being set in such a manner that its main optic axis makes an angle of 45 degrees with the crossed Nicols, in accordance with JIS-Z-8120.

2. A stretched film as claimed in Claim 1, having a retardation value of from 200 nm to 350 nm.

3. A stretched film as claimed in Claim 1, having a retardation value of from 475 nm to 625 nm.

4. A stretched film as claimed in Claim 1, 2 or 3, wherein said uniaxial stretching was carried out by transverse stretching by tentering.

5. A stretched film as claimed in any preceding claim, wherein the polycarbonate has been mixed with a polystyrene.

6. A stretched film as claimed in any preceding claim, wherein the polycarbonate copolymer has a bisphenol group.

7. A stretched film as claimed in Claim 6, wherein the polycarbonate is a straight-chain polycarbonate.

8. A liquid crystal display comprising an optical phase retarder constituted by a stretched film as claimed in any preceding claim.

9. A method of manufacturing an optical phase retarder in the form of a stretched film as claimed in any of Claims 1 to 7, which comprises transverse uniaxially stretching, compression stretching or longitudinal uniaxial stretching of a film or sheet of a polycarbonate homopolymer or copolymer while the neck-in ratio is controlled to not exceed 10%, and to an extent to give the retardation value and color difference defined in Claim 1, 2 or 3.

## Patentansprüche

1. Gedehnter Film zum Gebrauch als optischen Phasenverzögerer, der durch einachsige Dehnung eines Polykarbonatfilms erhalten wird, dadurch gekennzeichnet:

   - dass dieser Polykarbonatfilm ein Film aus homopolymerem oder kopolymerem Polykarbonat ist,

   - dass der gedehnte Film durch einachsige Transversaldehnung, Kompressionsdehnung oder einachsige Longitudinaldehnung dieses Polymerfilms erhalten wird, wobei das Verformungsverhältnis kontrolliert wird, dass es 10% nicht übersteigt, dass der mit einem Polarisationsmikroskop gemessene Verzögerungswert dieses gedehnten Films zwischen 200 nm und 625 nm liegt, und dass die optische Farbungleichmässigkeit klein ist, wobei dieses Merkmal durch den Tatbestand bestimmt wird, dass die in Bezug auf die Kubikwurzel Formel angegebene und gemäss den in JIS-Z-8729 gegebenen Farbbestimmungen gemessene Farbdifferenz $\Delta EC_R$ dieses gedehnten Films derart ist, dass der davon höchste gemessene Wert nicht mehr als 20 beträgt, wobei die Messung mit einem Spektrophotometer unter zwei gekreuzten Nicol Prismen mit dem gedehnten Film der-art angeordnet erfolgt, dass seine optische Achse gemäss JIS-Z-8120 einen Winkel von 45 Grad mit den gekreuzten Nicols bildet.

2. Gedehnter Film nach Anspruch 1, der einen Verzögerungswert von 200 nm bis 350 nm aufweist.

3. Gedehnter Film nach Anspruch 1, der einen Verzögerungswert von 475 bis 625 nm aufweist.

4. Gedehnter Film nach Anspruch 1, 2 oder 3, bei dem die benannte einachsige Dehnung durch transversal Dehnung mittels Aufrahmen durchgeführt wird.

**5.** Gedehnter Film nach einen der vorhergehenden Ansprüche, bei dem das Polykarbonat mit einem Polystyrol gemischt worden ist.

**6.** Gedehnter Film nach einen der vorhergehenden Ansprüche, bei dem der Polykarbonat Kopolymer eine Bisphenol Gruppe aufweist.

**7.** Gedehnter Film nach Anspruch 6, bei dem das Polykarbonat ein gradkettiges Polykarbonat ist.

**8.** Flüssigkristallanzeige mit einem optischen Phasenverzögerer, der durch einen in den vorhergehenden Ansprüchen beanspruchten gedehnten Film gebildet wird.

**9.** Verfahren zur Herstellung eines optischen Phasenverzögerers in der Form eines wie in einem der Ansprüche 1 bis 7 beanspruchten gedehnten Films, das einachsiges Transversaldehnen, Kompressionsdehnen oder einachsiges Longitudinaldehnen eines Films oder Blattes von einem Polykarbonat Homopolymer oder Kopolymer umfasst, wobei das Verformungsverhältnis kontrolliert wird, so dass es 10% nicht übersteigt und in einem Ausmass, dass ein Verzögerungswert und eine Farbdifferenz wie in den Ansprüchen 1,2 und 3 definiert erhalten wird.

**Revendications**

**1.** Film étiré utilisable comme retardateur de phase optique obtenu par étirage uniaxial d'un film de polycarbonate, caractérisé en ce:
- que ledit film est un film de polycarbonate homopolymer ou copolymer,
- que ledit film est obtenu par étirage uniaxial transversal, étirage par compression ou étirage uniaxial longitudinal dudit film polymer, le taux de striction étant contrôlé de façon à ne pas dépasser 10% et de sorte que la valeur retard dudit film étiré mesure avec un microscope polarisant soit comprise entre 200 nm et 625 nm et que l'inégalité de couleur optique dudit film étiré soit faible, cette caractéristique étant déterminée par le fait que la différence de couleur $E_{cr}$ dudit film étiré, donnée en termes de la formule racine cubique et mesurée selon les spécifications de couleur données dans JIS-Z-8729, est telle que la valeur la plus élevée mesurée de ce film n'est pas plus grande que 20 en mesurant avec un spectrophotomètre entre deux prismes Nicol croisés avec le film étiré disposé de manière que son axe optique principal forme un angle de 45% avec les Nicols croisés en accord avec JIS-Z-8120.

**2.** Film étiré selon la revendication 1, comportant une valeur retard de 200 nm à 350 nm.

**3.** Film étiré selon la revendication 1, comportant une valeur retard de 475 nm à 625 nm.

**4.** Film étiré selon les revendications 1, 2 ou 3, dans lequel ledit étirage uniaxial a été effectué par étirage transversal par ramage.

**5.** Film étiré selon l'une des revendications précédantes, dans lequel le polycarbonate a été mélangé avec un polystyrène.

**6.** Film étiré selon l'une des revendications précédantes, dans lequel le copolymer de polycarbonate possède un groupe bisphénol.

**7.** Film étiré selon la revendication 6, dans lequel le polycarbonate est un polycarbonate à chaîne droite.

**8.** Affichage à cristaux liquide comprenant un retardateur de phase optique constitué par un film étiré tel que revendiqué dans l'une des revendications précédantes.

**9.** Procédé pour fabriquer un retardateur de phase optique sous forme d'un film étiré tel que revendiqué dans l'une des revendications 1 à 7, comprenant un étirage uniaxial transversal, un étirage par compression ou un étirage uniaxial longitudinal d'un film ou d'une feuille d'un polycarbonate homopolymer ou copolymer, tout en contrôlant le taux de striction de façon à ne pas dépasser 10% et de sorte que la valeur retard et la différence de couleur définies dans les revendications 1,2 ou 3 soient obtenues.